# EUROPÄISCHE PATENTSCHRIFT

(11) **EP 3 785 361 B1**
(45) Veröffentlichungstag und Bekanntmachung des Hinweises auf die Patenterteilung: **02.09.2026**
(21) Anmeldenummer: 19740508.7
(22) Anmeldetag: 09.07.2019
(51) Int. Cl.: H02M 1/42

(54) **SCHALTUNGSANORDNUNG ZUR ZWISCHENKREISSYMMETRIERUNG**
CIRCUIT ASSEMBLY FOR INTERMEDIATE CIRCUIT BALANCING
CIRCUIT POUR LA SYMÉTRISATION DE CIRCUIT INTERMÉDIAIRE

(30) Priorität: 26.07.2018 DE 102018118068
(43) Veröffentlichungstag der Anmeldung: 03.03.2021
(73) Patentinhaber: ebm-papst Mulfingen GmbH & Co. KG, 74673 Mulfingen (DE)
(72) Erfinder: SCHNEIDER, Alex, 74653 Künzelsau (DE)
(74) Vertreter: Staeger & Sperling Partnerschaftsgesellschaft mbB
(86) Internationale Anmeldenummer: PCT/EP2019/068441
(87) Internationale Veröffentlichungsnummer: WO 2020/020635

(56) Entgegenhaltungen:
- EP-A1- 2 393 182
- CN-U- 207 299 645
- CN-U- 207 299 645
- DE-A1- 102017 116 109
- US-A- 5 682 022

## Beschreibung

Die Erfindung betrifft eine verbesserte Schaltungsanordnung, die insbesondere dazu geeignet ist, bei der Steuerung und Regelung in kältetechnischen Anlagen Anwendung zu finden.

Aus der DE 10 2015 108 910 D1 ist ein beispielhaftes Kühlgerät, insbesondere für die Kühlung von in einem Schaltschrank aufgenommenen Komponenten bekannt. Aus dem Stand der Technik sind derartige Kühlgeräte bekannt, bei denen die elektrischen Komponenten hinsichtlich der für den Betrieb erforderlichen Spannungsversorgung auf die im vorgesehenen geografischen Einsatzgebiet des Kühlgeräts vorherrschenden elektrischen Netzspannungen angepasst sind. So ist es beispielsweise üblich, dass für jede Leistungsstufe eines Kühlgeräts jeweils eine Variante für eine Netzspannung von 115 V, 230 V und für 400 V angeboten wird, um das Kühlgerät weitestgehend weltweit anbieten zu können. Hinzu kommen diverse Sonderspannungen.

Im Stand der Technik wird typischerweise mit einem Gleichrichter die Eingangsspannung gleichgerichtet, bevor diese aufbereitet wird. Des Weiteren wird im Zwischenkreis für die Gleichspannungsversorgung typischerweise ein gemeinsamer Kondensator geschaltet. Hierfür fallen hohe Kosten an, da Kondensatoren die hohe Nennspannung des Zwischenkreises aufweisen müssen. Insgesamt ist die Effizienz unbefriedigend, da durch den Gleichrichter zusätzliche Verlustleistung und Abwärme entsteht, was zusätzlichen Aufwand für die Kühlung bedeutet.

Weiterer druckschriftlicher Stand der Technik im vorliegenden technischen Gebiet ist in den Dokumenten EP 2 393 182 A1, US 5 682 022 A und CN 207 299 645 U offenbart.

Der Erfindung liegt deshalb die Aufgabe zugrunde, vorbesagte Nachteile zu überwinden und eine verbesserte Schaltungsanordnung zu schaffen, die kostengünstig herstellbar ist und eine verbesserte Lebensdauer aufweist und insbesondere dazu beiträgt die Steuer- und Regelungselektroniken funktionell zu verbessern in denen die Schaltungsanordnung Anwendung findet.

Diese Aufgabe wird durch die Merkmalskombination gemäß Anspruch 1 gelöst.

Ein Grundgedanke der Erfindung besteht darin, Schaltungskonzepte zu verwenden die den Gleichrichter nur zum Teil oder möglichst nicht benötigen, d. h. eine effiziente Zwischenkreisaufbereitung für die Versorgung von elektronischen Komponenten mittels einer entsprechend angepassten Schaltungsanordnung sicher zu stellen.

Erfindungsgemäß wird hierzu eine Schaltungsanordnung zur Zwischenkreissymmetrierung einer Zwischenkreisspannung U_{ZK} eines von einer Netzwechselspannung U_{N} gespeisten Gleichspannungszwischenkreises zur Spannungsversorgung eines oder mehrerer Geräte vorgeschlagen, umfassend
a) einen im Spannungsteilerverhältnis konfigurierbaren Spannungsteiler bestehend aus mehreren elektrischen Zweipolen R1, R2, ..., R6, durch die die Zwischenkreisspannung U_{ZK} in Spannungsanteile an jedem Zweipol aufgeteilt wird,
b) wenigstens einen ersten Zwischenkreis-Kondensator aufladbar auf einen ersten Anteil U_{ZK,1} der Zwischenkreisspannung U_{ZK},
c) wenigstens einen zweiten Zwischenkreis-Kondensator aufladbar auf einen zweiten Anteil U_{ZK,2} der Zwischenkreisspannung U_{ZK},
wobei eine Verbindungsleitung von wenigstens einem Spannungsteilerabgriff des Spannungsteilers zwischen zwei Zweipolen und dem wenigstens ersten und zweiten Kondensator verbunden ist, derart, dass die wenigstens beiden Kondensatoren in einem vorbestimmten Spannungsverhältnis U_{ZK,1} / U_{ZK,2} aufladbar sind.

Besonders vorteilhaft ist es dabei, wenn die mindestens zwei Kondensatoren im Teilerverhältnis 50/50 oder frei wählbar auf die Zwischenkreisspannung aufladbar sind.

Erfindungsgemäß ist vor dem Spannungsteiler eine elektronische Zwischenkreisaufbereitung zur Aufbereitung der Zwischenkreisspannung vorgesehen ist.

In vorteilhafter Weise kann zur Spannungsaufbereitung der Zwischenkreisgleichspannung ein Gleichspannungswandler in der Form eines Sperrwandlers oder Hoch-Tiefsetzstellers verwendet werden.

In einer ersten vorteilhaften Ausgestaltung der Erfindung wird vorgesehen, dass die Zwischenkreisaufbereitung als brückenlose Leistungsfaktorkorrekturschaltung (bridgeless PFC) ausgeführt ist.

In einer weiteren vorteilhaften Ausgestaltung der Erfindung ist vorgesehen, dass die Zwischenkreisaufbereitung als Leistungsfaktorkorrekturschaltung (interleaved PFC) mit einer Teilbrücke ausgeführt ist.

In einer besonders vorteilhaften Ausgestaltung der Erfindung ist vorgesehen, dass das Spannungsteilerverhältnis über die Konfiguration der konfigurierbaren Zweipole für die Zwischenkreis-Kondensatoren nach einem gewünschten, insbesondere anwenderspezifisch benötigten Verhältnis frei einstellbar.

Ebenfalls von Vorteil ist es, wenn zwischen der netzspannungsseitigen Eingangsseite und der Ausgangsseite des Gleichspannungszwischenkreises eine galvanische Trennung vorgesehen ist, was z. B. bereits durch die Verwendung eines entsprechenden Sperrwandlers erfolgen kann, bei dem die Energie über elektromagnetische Übertrager (z. B. Spulen oder Induktivitäten) von einer Primärseite auf eine Sekundärseite des Sperrwandlers übertragen wird.

Erfindungsgemäß wird ein System zur gemeinsamen Spannungsversorgung der jeweiligen Endstufen mehrerer Geräte mit einer wie zuvor beschriebenen Schaltungsanordnung vorgeschlagen, wobei die jeweiligen DC/AC-Endstufen der Geräte unmittelbar oder alternativ mittelbar über einen DC/DC-Spannungswandler mit der Spannung aus dem Zwischenkreis versorgt bzw. verbunden werden.

Weiter vorteilhaft ist es, wenn das System ein Kühlsystem ist, das eine Kältekreislaufregelung aufweist, die über einen Gleichspannungswandler mit dem Zwischenkreis der Schaltungsanordnung verbunden ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausführungsbeispiel einer erfindungsgemäßen Schaltungsanordnung und
- Fig. 2: eine alternative Ausführungsform zur Schaltungsanordnung aus Fig. 1.

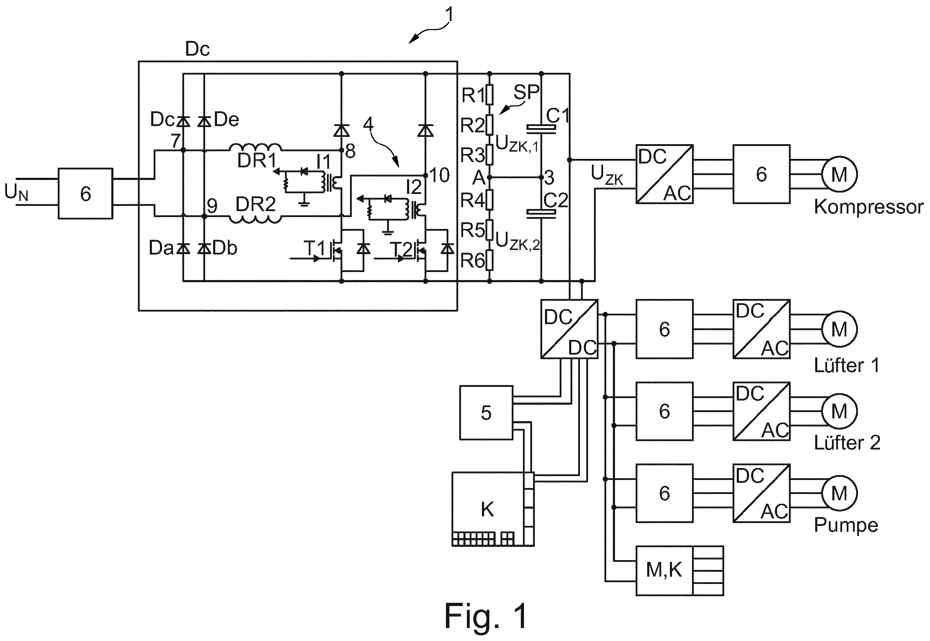

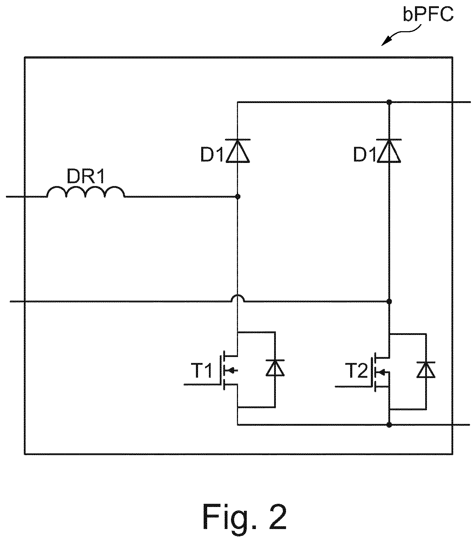

Im Folgenden wird die Erfindung mit Bezug auf die Figuren 1 und 2 näher beschrieben, wobei gleiche Bezugszeichen auf gleiche strukturelle und/oder funktionale Merkmale hinweisen.

In der Fig. 1 ist ein Ausführungsbeispiel einer erfindungsgemäßen Schaltungsanordnung 1 gezeigt. Die dargestellte Schaltungsanordnung 1 ist ausgebildet zur Zwischenkreissymmetrierung einer Zwischenkreisspannung U_{ZK} eines von einer Netzwechselspannung U_{N} gespeisten Gleichspannungszwischenkreises zur Spannungsversorgung eines oder mehrerer der in dem System dargestellten Geräte M, K, welche hier beispielhaft ein Kompressor M, zwei Lüfter M, eine Pumpe M, eine Kältekreislaufregelung K und sonstige Geräte M, K umfassen. Die Schaltungsanordnung 1 umfasst insbesondere zur Zwischenkreissymmetrierung einen im Spannungsteilerverhältnis konfigurierbaren Spannungsteiler SP. Der Spannungsteiler SP besteht aus mehreren (hier 6) elektrischen Zweipolen R1, R2, ..., R6, durch die die Zwischenkreisspannung U_{ZK} in Spannungsanteile an jedem Zweipol aufgeteilt wird. Als Zweipole können hier z. B. regelbare Widerstände R1, R2, ..., R6 vorgesehen werden.

Ferner weist die Schaltungsanordnung 1 zwei Zwischenkreis-Kondensatoren C1, C2 auf und zwar einen ersten Zwischenkreis-Kondensator C1 aufladbar auf einen ersten Anteil U_{ZK,1} der Zwischenkreisspannung U_{ZK} (bzw. auf die Zwischenkreisspannung) und einen zweiten Zwischenkreis-Kondensator C2 aufladbar auf einen zweiten Anteil U_{ZK,2} der Zwischenkreisspannung U_{ZK} (bzw. auf die Zwischenkreisspannung).

Der Spannungsteiler SP ist in Parallelschaltung zur Serienschaltung der beiden Kondensatoren C1, C2 zwischen denen sich der Spannungskonten 3 befindet. Von einem Spannungsteilerabgriff A des Spannungsteilers SP zwischen den Zweipolen R3 und R4 geht eine Verbindungsleitung zum Spannungsknoten 3 zwischen dem ersten und zweiten Kondensator C1, C2.

Die Schaltungsanordnung 1 weist ferner vor dem Spannungsteiler SP eine elektronische Zwischenkreisaufbereitung 2 zur Aufbereitung der Zwischenkreisspannung auf. In der Ausführung nach Figur 1 ist hierzu ein Gleichspannungswandler in der Form eines Sperrwandlers bzw. Hoch-Tiefsetzstellers 4 vorgesehen, während in der alternativen Ausführung der Figur 2 (die hier nur die alternative Zwischenkreisaufbereitung 2 zeigt) eine brückenlose Leistungsfaktorkorrekturschaltung (bPFC) aus den Dioden D1, D2 und den Transistoren T1, T2 ausgeführt ist. Ferner ist eine Drossel DR1 in einem Phasenpfad zum EMV-Filter 6 vorgesehen.

In der Ausführung nach Figur 1 sind die Dioden Dc und Da in einem Zweig und die Dioden De und Db in einem parallel Zweig vorgesehen. Ein Knoten 7 im ersten Zweig führt über die PFC-Drossel DR1 zu einem Knoten 8 vor der Diode D1, während eine Verbindung von einem Knoten 9 im zweiten Zweig zu einem Knoten 10 vor der Diode D2 führt. Ferner sind schaltungsgemäß die Transistoren T1 und T2 und die induktiven Kopplungsspulen I1, I2 des induktiven Stromübertrages 4 dargestellt. Die Kopplungsspulen sind zur Signalaufbereitung I1, I2 vorgesehen.

Insgesamt zeigt die Figur 1 ein System zur gemeinsamen Spannungsversorgung der jeweiligen Endstufen DC/AC der mehreren an dem gemeinsamen Zwischenkreis angeschlossenen Geräte M, K.

Die Endstufe DC/AC für den Kompressor M ist unmittelbar mit der Spannung aus dem Zwischenkreis verbunden. Die DC/AC-Endstufen der Pumpe M und der Lüfter 1, 2 sind mittelbar über die dargestellten EMV Filter 6 mit dem Gleichspannungswandler DC/DC mit dem Zwischenkreis verbunden.

Das System weist ferner eine Kältekreislaufregelung K auf, die über den Gleichspannungswandler DC/DC mit dem Zwischenkreis verbunden ist. Ebenfalls dargestellt ist ein Display 5, zur Darstellung und Anzeige von Parametern der Kältekreislaufregelung K oder anderer Systemdaten. Eingangsseitig ist die Schaltungsanordnung 1 über einen EMV-Filter 6 mit der Netzwechselspannung U_{N} verbunden. Mit dem dargestellten System lassen sich insbesondere die der Erfindung zu Grunde gelegte Aufgabe und die folgenden Vorteile erzielen:
- Gleichrichterverluste werden minimiert oder entfallen komplett
- Es können günstigere Kondensatoren eingesetzt werden, da diese nicht die Zwischenkreisspannungshöhe als Nennspannung aufweisen müssen
- Lebensdauererhöhung durch Reduzierung der Spannung am Kondensator
- Mindestens eine zentrale Niederspannungsversorgung für Lüfter, Pumpen und andere Komponenten
- Lebensdauerüberwachung von einzelnen Komponenten wird verbessert / vereinfacht
- Steigerung funktionaler Sicherheit.

## Patentansprüche

1. System mit einer Zwischenkreisschaltung zur Zwischenkreissymmetrierung einer Zwischenkreisspannung U_{ZK} eines von einer Netzwechselspannung U_{N} gespeisten Gleichspannungszwischenkreises zur Spannungsversorgung eines oder mehrerer Geräte, umfassend mehrere mit DC-AC-Endstufen (DC/AC) ausgestattete Geräte, die mit der Zwischenkreisspannung U_{ZK} versorgt werden, weiter umfassend:
a. einen im Spannungsteilerverhältnis konfigurierbaren Spannungsteiler (SP) bestehend aus mehreren elektrischen Zweipolen (R1, R2, ..., R6), durch die die Zwischenkreisspannung U_{ZK} in Spannungsanteile an jedem Zweipol aufgeteilt wird,
b. wenigstens einen ersten Zwischenkreis-Kondensator (C1) aufladbar auf einen ersten Anteil U_{ZK,1} der Zwischenkreisspannung U_{ZK},
c. wenigstens einen zweiten Zwischenkreis-Kondensator (C2) aufladbar auf einen zweiten Anteil U_{ZK,2} der Zwischenkreisspannung U_{ZK},
d. wobei die DC-AC Endstufen (DC/AC) mittelbar über einen Spannungswandler (DC/DC) mit der Zwischenkreisspannung U_{ZK} versorgt werden und
wobei eine Verbindungsleitung von wenigstens einem Spannungsteilerabgriff (A) des Spannungsteilers (SP) zwischen zwei Zweipolen (R1, R2, ..., R6) und dem wenigstens ersten und zweiten Kondensator (C1, C2) verbunden ist, derart, dass die wenigstens beiden Kondensatoren (C1, C2) in einem vorbestimmten Spannungsverhältnis U_{ZK,1} / U_{ZK,2} aufladbar sind, wobei die Zwischenkreisschaltung vor dem Spannungsteiler (SP) eine elektronische Zwischenkreisaufbereitung zur Aufbereitung der Zwischenkreisspannung aufweist.

2. System nach Anspruch 1, **dadurch gekennzeichnet, dass** zur Spannungsaufbereitung der Zwischenkreisgleichspannung ein Gleichspannungswandler in der Form eines Sperrwandlers oder Hoch-Tiefsetzstellers verwendet wird.

3. System nach Anspruch 1, **dadurch gekennzeichnet, dass** die Zwischenkreisaufbereitung als brückenlose Leistungsfaktorkorrekturschaltung (bPFC) ausgeführt ist.

4. System nach Anspruch 1, **dadurch gekennzeichnet, dass** die Zwischenkreisaufbereitung als Leistungsfaktorkorrekturschaltung (interleaved PFC) mit einer Teilbrücke ausgeführt ist.

5. System nach einem der vorhergehenden Ansprüche, **dadurch gekennzeichnet, dass** das Spannungsteilerverhältnis über die Konfiguration der konfigurierbaren Zweipole (R1, R2, ..., R6) für die Zwischenkreis-Kondensatoren (C1, C2) nach einem gewünschten Verhältnis frei einstellbar.

6. System nach einem der vorhergehenden Ansprüchen, **dadurch gekennzeichnet, dass** zwischen der netzspannungsseitigen Eingangsseite und der Ausgangsseite des Gleichspannungszwischenkreises eine galvanische Trennung vorgesehen ist.

7. System nach einem der vorhergehenden Ansprüchen, **dadurch gekennzeichnet, dass** ein Spannungsteilerabgriff (A) des Spannungsteilers (SP) mittig zwischen einer ersten Anzahl an in Serie geschalteten zwei Zweipolen (R1, R2, R3) und einer zweiten Anzahl an in Serie geschalteten Zweipolen (R4, R5, R6) vorgesehen ist, der an einem Zwischenabgriff zwischen dem ersten und zweiten Kondensator (C1, C2) verbunden ist, derart, dass die wenigstens beiden Kondensatoren (C1, C2) in einem vorbestimmten Spannungsverhältnis U_{ZK,1} / U_{ZK,2} insbesondere im Verhältnis 50/50 symmetrisch aufladbar sind.

8. System gemäß Anspruch 1, **dadurch gekennzeichnet, dass** das System eine Kältekreislaufregelung aufweist, die über den Gleichspannungswandler (DC/DC) mit der Zwischenkreisschaltung verbunden ist.

## Claims

1. A system with an intermediate circuit for intermediate circuit balancing of an intermediate circuit voltage U_{ZK} of a DC intermediate circuit fed by an alternating mains voltage U_{N} for supplying a voltage to one or more devices, comprising multiple devices equipped with DC-AC output stages (DC/AC) supplied by the intermediate circuit voltage U_{ZK}, further comprising:
a. a voltage divider (SP) configurable in terms of the voltage divider ratio and consisting of multiple electric two-terminal devices (R1, R2, ..., R6) by which the intermediate circuit voltage U_{ZK} is divided into voltage portions at each two-terminal device,
b. at least one first intermediate circuit capacitor (C1) chargeable to a first portion U_{ZK,1} of the intermediate circuit voltage U_{ZK},
c. at least one second intermediate circuit capacitor (C2) chargeable to a second portion U_{ZK,2} of the intermediate circuit voltage U_{ZK},
d. wherein the DC-AC output stages (DC/AC) are supplied indirectly via a (DC/DC) voltage converter with the intermediate circuit voltage U_{ZK} and
wherein a connection line from at least one voltage divider tap (A) of the voltage divider (SP) is connected between two two-terminal devices (R1, R2, ..., R6) and the at least first and second capacitors (C1, C2) in such a manner that the at least two capacitors (C1, C2) are chargeable at a predetermined voltage ratio U_{ZK,1}/U_{ZK,2}, wherein the intermediate circuit comprises, before the voltage divider (SP), an electronic intermediate circuit processing for processing the intermediate circuit voltage.

2. The system according to claim 1, **characterized in that** for the voltage processing of the intermediate circuit DC voltage, a DC converter in the form of a flyback converter or boost-buck converter is used.

3. The system according to claim 1, **characterized in that** the intermediate circuit processing is implemented as a bridgeless power factor correction circuit (bPFC).

4. The system according to claim 1, **characterized in that** the intermediate circuit processing is implemented as a power factor correction circuit (interleaved PFC) with a partial bridge.

5. The system according to any one of the preceding claims, **characterized in that**, via the configuration of the configurable two-terminal devices (R1, R2, ..., R6), the voltage divider ratio can be freely set for the intermediate circuit capacitors (C1, C2) according to a desired ratio.

6. The system according to any one of the preceding claims, **characterized in that** a galvanic separation is provided between the mains voltage-side input side and the output side of the DC intermediate circuit.

7. The system according to any one of the preceding claims, **characterized in that** a voltage divider tap (A) of the voltage divider (SP) is provided centrally between a first number of series-connected two-terminal devices (R1, R2, R3) and a second number of series-connected two-terminal devices (R4, R5, R6), which is connected to an intermediate tap between the first and second capacitors (C1, C2) in such a manner that the at least two capacitors (C1, C2) are symmetrically chargeable at a predetermined voltage ratio U_{ZK,1}/U_{ZK,2}, in particular the ratio 50/50.

8. The system according to claim 1, **characterized in that** the system comprises a refrigeration circuit closed-loop control which is connected to the intermediate circuit via the DC converter (DC/DC).

## Revendications

1. Système comprenant un circuit de liaison intermédiaire pour l'équilibrage de liaison intermédiaire d'une tension de liaison intermédiaire U_{ZK} d'un circuit intermédiaire à courant continu alimenté par une tension alternative de réseau U_{N} pour l'alimentation en tension d'un ou de plusieurs appareils, comprenant plusieurs appareils équipés d'étages de sortie CC-CA (CC/CA) qui sont alimentés par la tension de liaison intermédiaire U_{ZK}, comprenant en outre :
a. un diviseur de tension (SP) configurable en termes de rapport de division de tension, composé de plusieurs dipôles électriques (R1, R2, ..., R6) par lesquels la tension de liaison intermédiaire U_{ZK} est divisée en fractions de tension au niveau de chaque dipôle,
b. au moins un premier condensateur de liaison intermédiaire (C1) pouvant être chargé à une première fraction U_{ZK,1} de la tension de liaison intermédiaire U_{ZK},
c. au moins un deuxième condensateur de liaison intermédiaire (C2) pouvant être chargé à une deuxième fraction U_{ZK,2} de la tension de liaison intermédiaire U_{ZK},
d. dans lequel les étages de sortie CC-CA (CC/CA) sont alimentés de manière indirecte par la tension de liaison intermédiaire U_{ZK} via un convertisseur de tension (CC/CC), et
dans lequel une ligne de connexion relie au moins une prise de diviseur de tension (A) du diviseur de tension (SP) située entre deux dipôles (R1, R2, ..., R6) et les au moins premier et deuxième condensateurs (C1, C2), de telle sorte que les au moins deux condensateurs (C1, C2) peuvent être chargés selon un rapport de tension prédéterminé U_{ZK,1} / U_{ZK,2}, dans lequel le circuit de liaison intermédiaire comporte, en amont du diviseur de tension (SP), un système électronique de conditionnement de liaison intermédiaire destiné au conditionnement de la tension de liaison intermédiaire.

2. Système selon la revendication 1, **caractérisé en ce que**, pour le conditionnement de tension de la tension continue de liaison intermédiaire, un convertisseur continu-continu sous la forme d'un convertisseur à accumulation de blocage ou d'un convertisseur abaisseur-élévateur est utilisé.

3. Système selon la revendication 1, **caractérisé en ce que** le conditionnement de liaison intermédiaire est réalisé sous la forme d'un circuit de correction du facteur de puissance sans pont (bPFC).

4. Système selon la revendication 1, **caractérisé en ce que** le conditionnement de liaison intermédiaire est réalisé sous la forme d'un circuit de correction du facteur de puissance entrelacé (interleaved PFC) avec un pont partiel.

5. Système selon l'une des revendications précédentes, **caractérisé en ce que** le rapport de division de tension est librement réglable selon un rapport souhaité par le biais de la configuration des dipôles configurables (R1, R2, ..., R6) pour les condensateurs de liaison intermédiaire (C1, C2).

6. Système selon l'une des revendications précédentes, **caractérisé en ce qu'**une isolation galvanique est prévue entre le côté entrée associé à la tension de réseau et le côté sortie du circuit intermédiaire à courant continu.

7. Système selon l'une des revendications précédentes, **caractérisé en ce qu'**une prise de diviseur de tension (A) du diviseur de tension (SP) est prévue au centre entre un premier nombre de dipôles connectés en série (R1, R2, R3) et un deuxième nombre de dipôles connectés en série (R4, R5, R6), laquelle prise est connectée au niveau d'une prise intermédiaire entre les premier et deuxième condensateurs (C1, C2), de telle sorte que les au moins deux condensateurs (C1, C2) peuvent être chargés symétriquement selon un rapport de tension prédéterminé U_{ZK,1} / U_{ZK,2}, en particulier selon un rapport de 50/50.

8. Système selon la revendication 1, **caractérisé en ce que** le système comporte un système de régulation de cycle frigorifique qui est connecté au circuit de liaison intermédiaire via le convertisseur continu-continu (CC/CC).
